# EUROPEAN PATENT SPECIFICATION

(11) **EP 2 735 550 B1**
(45) Date of publication and mention of the grant of the patent: **25.05.2016**
(21) Application number: 12814776.6
(22) Date of filing: 12.07.2012
(51) Int. Cl.: C03B 5/43, C03B 5/187, C03B 5/225, C04B 35/482, C03C 3/091, C03C 3/093, C04B 38/00, C04B 111/00

(54) **MOLTEN GLASS CONVEYING EQUIPMENT ELEMENT, METHOD FOR PRODUCING MOLTEN GLASS CONVEYING EQUIPMENT ELEMENT, AND GLASS MANUFACTURING APPARATUS**
ELEMENT FÜR EINE VORRICHTUNG ZUR FÖRDERUNG VON GESCHMOLZENEM GLAS, VERFAHREN ZUR HERSTELLUNG DES ELEMENTS FÜR EINE VORRICHTUNG ZUR FÖRDERUNG VON GESCHMOLZENEM GLAS UND GLASHERSTELLUNGSVORRICHTUNG
ÉLÉMENT D'ÉQUIPEMENT DE TRANSPORT DE VERRE FONDU, PROCÉDÉ POUR PRODUIRE UN ÉLÉMENT D'ÉQUIPEMENT DE TRANSPORT DE VERRE FONDU, ET APPAREIL DE FABRICATION DE VERRE

(30) Priority: 21.07.2011 JP 2011159929
(43) Date of publication of application: 28.05.2014
(73) Proprietor: Asahi Glass Company, Limited, Chiyoda-ku Tokyo 100-8405 (JP)
(72) Inventor: HAMASHIMA, Kazuo, Tokyo 1008405 (JP); NIWA, Akifumi, Tokyo 1008405 (JP)
(74) Representative: Müller-Boré & Partner Patentanwälte PartG mbB
(86) International application number: PCT/JP2012/067863
(87) International publication number: WO 2013/011927

(56) References cited:
- WO-A1-2004/101466
- WO-A1-2010/067669
- WO-A1-2010/135045
- JP-A- 2006 315 894
- US-A- 4 923 830
- US-A1- 2010 126 907
- US-A1- 2010 290 978
- DATABASE WPI Week 201042 Thomson Scientific, London, GB; AN 2010-G89655 XP002731636, -& WO 2010/067669 A1 (ASAHI GLASS CO LTD) 17 June 2010 (2010-06-17)
- WEN-CHENG J. WEI, YUH-PRING LIN: "Processing Character of MgO-Partially Stabilized Zirconia (PSZ) in Size Grading Prepared by Injection Molding", J. EUROP. CERAM. SOC., vol. 18, 1998, pages 2107-2116, XP002584873,

## Description

The present invention relates to a molten glass conveying equipment element that can be suitably used in a glass manufacturing apparatus such as a vacuum degassing apparatus, a method for producing the molten glass conveying equipment element, and a glass manufacturing apparatus containing the molten glass conveying equipment element.

It is required in a glass manufacturing apparatus such as a vacuum degassing apparatus that a constituent material of a conduit for molten glass is excellent in heat resistance and corrosion resistance to molten glass. Platinum or a platinum alloy is used as a material satisfying the requirement (see Patent Document 1). An insulating brick is arranged around a conduit for molten glass made of platinum or a platinum alloy so as to surround the conduit.

Platinum or the platinum alloy constituting the conduit, and the insulating brick arranged around the conduit have different coefficient of thermal expansion. Therefore, the difference in the amount of thermal expansion when heating and the difference in the amount of shrinkage when cooling becomes the problem.

To absorb the difference in the amount of thermal expansion when heating or the difference in the amount of shrinkage when cooling, unshaped ceramic material such as castable cement is filled between the conduit and the insulating brick so that those can slightly move relatively when the temperature change has occurred.

The present inventors have found that the filling with unshaped ceramic material may not absorb the difference in the amount of thermal expansion when heating or the difference in the amount of shrinkage when cooling, depending on the arrangement of the conduit for molten glass. For example, the difference in the amount of thermal expansion when heating or the difference in the amount of shrinkage when cooling cannot be absorbed by unshaped ceramic material at the junction between a vertical pipe and a horizontal pipe, and cracks are likely to occur at the junction. If cracks occur at the junction, there is a problem that an insulating brick arranged around the conduit is corroded by molten glass leaked from the cracks. This gives rise to the problems such that productivity is decreased due to repair work and the life of facilities shortens.

To solve those problems, the present inventors have provided a molten glass conveying equipment element and a glass manufacturing apparatus, described in Patent Document 2.

In the molten glass conveying equipment element described in Patent Document 2, a ceramic structure having a coefficient of linear thermal expansion substantially equal to that of platinum or a platinum alloy constituting a conduit for molten glass made of platinum or a platinum alloy is arranged around the conduit, thereby the difference in the amount of thermal expansion when heating or the difference in the amount of shrinkage when cooling becomes considerably small. As a result, cracks at the junction between a vertical pipe and a horizontal pipe due to thermal expansion when heating or shrinkage when cooling is prevented from occurring.

Patent Document 1: JP-A-2002-87826
Patent Document 2: WO2010/067669

In the molten glass conveying equipment element described in Patent Document 2, a gap is provided between a conduit made of platinum or a platinum alloy and a ceramic structure, thereby deviation of the timing of thermal expansion when heating or shrinkage when cooling between the conduit and the ceramic structure can be absorbed, and cracks at the junction can be prevented from occurring. However, where such a gap is present, there is a possibility that the conduit deforms, leading to the breakage thereof.

It is considered in the molten glass conveying equipment element described in Patent Document 2 that a conduit made of platinum or the platinum alloy has sufficient strength during use. However, there is a possibility that strength of the conduit is decreased by, for example, deterioration of a material of the conduit due to the use in high temperature environment. Furthermore, there is a case that expansion pressure applied from molten glass is increased by the change of use condition of a molten glass conveying equipment element, for example, by the stirring of molten glass passing through the conduit with a stirrer. As a result, strength of the conduit becomes insufficient to expansion pressure applied from molten glass, and there is a possibility that the conduit deforms, leading to the breakage thereof.

To prevent deformation of the conduit, a ceramic structure is arranged without providing a gap around the conduit. However, depending on the arrangement of the conduit and the shape of the conduit, there is difficulty in arranging the ceramic structure without providing a gap around the conduit. For example, it is difficult to arrange the ceramic structure without providing a gap around the conduit at the junction between a vertical pipe and a horizontal pipe. Moreover, Domestic Re-publication of PCT patent application No. 2004-070251 discloses a hollow pipe made of platinum or a platinum alloy which has at least one convex portion, which continues 360° in a circumferential direction provided thereon for the purpose of absorbing expansion and contraction due to heat. Furthermore, in order to prevent breakage of the conduit by thermal stress or stress applied from outside during the use over a long period of time, JP-A-2006-31589 discloses hollow pipe made of platinum or a platinum alloy having convex portions and concave portions which are alternately provided along an axis direction, and which continue 360° in a circumferential direction. However, it is difficult to arrange the ceramic structure without providing a gap around the conduit having convex portions and concave portions provided thereon.

To solve the above problems in the prior art, the present invention has an object to provide a molten glass conveying equipment element that achieves prevention of occurrence of cracks of a conduit due to thermal expansion when heating or shrinkage when cooling, and prevention of deformation of a conduit due to expansion pressure applied from molten glass, and has a ceramic structure that is difficult to be corroded even though molten glass is leaked for any reason, a method for producing the molten glass conveying equipment element, and a glass manufacturing apparatus containing the molten glass conveying equipment element.

In order to achieve the above object, the present invention provides a method for producing a molten glass conveying equipment element having a conduit structure for molten glass containing at least one conduit comprising platinum or a platinum alloy, a first ceramic structure provided around the conduit and a second ceramic structure located around the first ceramic structure, wherein a gap between the conduit and the second ceramic structure is filled with a slurry body, the slurry body is prepared by blending first stabilized zirconia particles having a median diameter D50 of 0.2 to 5 µm with second stabilized zirconia particles having a median diameter D50 of 0.2 to 2 mm in such a way that the ratio of the mass of the first stabilized zirconia particles to the mass of the second stabilized zirconia particles is 0.3 to 0.6 in which each of the first stabilized zirconia particles and the second stabilized zirconia particles contain, in terms of mass% to respective entire compositions, 75 wt% or more of a zirconium oxide, and a proportion of cubic zirconia in the zirconium oxide is 80 wt% or more, and at least one of stabilizers selected from the group consisting of yttrium oxide and cerium oxide is contained in a total content of 6 to 25 wt%, and then the first ceramic structure is formed by sintering the slurry body at a temperature of 1,200 to 1,700°C.

The present invention also provides a molten glass conveying equipment element produced by the method for producing a molten glass conveying equipment element of the present invention, wherein an open porosity of the first ceramic structure is 25 to 60%, a coefficient of linear thermal expansion at 20 to 1,000°C of the first ceramic structure is 8×10⁻⁶ to 12×10⁻⁶/°C, a compression strength at 1,400°C of the first ceramic structure is 5 MPa or more, and a gap between the conduit and the first ceramic structure is less than 0.5 mm.

Moreover, the present invention provides a glass manufacturing apparatus, including the molten glass conveying equipment element of the present invention, as well as a method for producing a glass using the glass manufacturing apparatus of the present invention.

According to the method for producing a molten glass conveying equipment element of the present invention, a first ceramic structure having a coefficient of linear thermal expansion nearly equal to that of platinum or a platinum alloy constituting a conduit for molten glass and having a given average open porosity can be formed around the conduit for molten glass made of platinum or the platinum alloy without providing a gap, without being affected by the arrangement and shape of the conduit.

In the molten glass conveying equipment element of the present invention, because the coefficient of linear thermal expansion of a conduit for molten glass made of platinum or the platinum alloy is nearly equal to that of the ceramic structure arranged around the conduit, the difference of the amount of thermal expansion when heating or the difference of the amount of shrinkage when cooling is extremely small. As a result, the occurrence of cracks in the conduit due to thermal expansion when heating or shrinkage when cooling, for example, the occurrence of cracks at a junction between a conduit having a center axis in a vertical direction and a conduit having a center axis in a horizontal direction, can be prevented. Additionally, the ceramic structure in the present invention is difficult to be corroded even though molten glass is leaked for any reason.

Furthermore, in the molten glass conveying equipment element of the present invention, because the first ceramic structure having sufficient compression strength in a temperature range that molten glass passes through the conduit is formed without providing a gap around the conduit for molten glass, deformation of the conduit due to expansion pressure applied from the molten glass passing thought the inside thereof is prevented.

The glass manufacturing apparatus of the present invention containing the molten glass conveying equipment element is that the occurrence of cracks in the conduit due to thermal expansion when heating or shrinkage when cooling is prevented, the deformation of the conduit due to expansion pressure applied from molten glass passing through the inside thereof is prevented, and the ceramic structure is difficult to be corroded even though molten glass is leaked for any reason. Therefore, the glass manufacturing apparatus has excellent reliability and can produce a glass stably over a long period of time.

[Fig. 1] Fig. 1 is a cross-sectional view showing one configuration example of the molten glass conveying equipment element of the present invention.
[Fig. 2] Fig. 2 is a cross-sectional view showing other configuration example of the molten glass conveying equipment element of the present invention.
[Fig. 3] Fig. 3 is a graph showing the relationship between loading time and the amount of compression strain.
[Fig. 4] Fig. 4 shows the state of a conduit before and after compression strain test.

The present invention is described below by reference to the drawings.

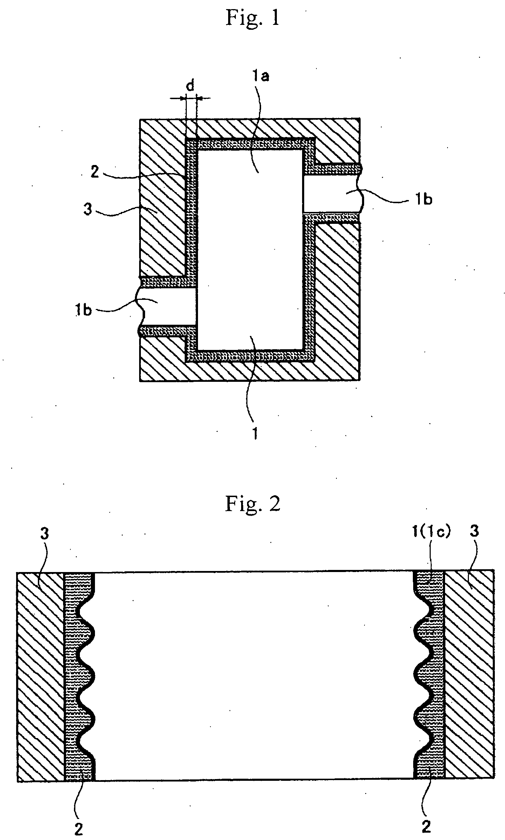

Fig. 1 is a cross-sectional view showing one configuration example of the molten glass conveying equipment element of the present invention.

In the molten glass conveying equipment element shown in Fig. 1, a conduit structure 1 for molten glass has a structure that two conduits 1b and 1b having a center axis in a horizontal direction (hereinafter referred to as "horizontal pipes") are communicated with a conduit 1a having a center axis in a vertical direction (hereinafter referred to as a "vertical pipe").

In Fig. 1, a first ceramic structure 2 is arranged around the conduits (vertical pipe 1a and horizontal pipe 1b) constituting the conduit structure 1 for molten glass, and a second ceramic structure 3 is located around the first ceramic structure 2.

The molten glass conveying equipment element in the present invention is not limited to the embodiment shown in the drawings so long as the element has at least one conduit.

Fig. 2 is a cross-sectional view showing other configuration example of the molten glass conveying equipment element of the present invention.

In the molten glass conveying equipment element shown in Fig. 2, the conduit structure 1 for molten glass has only one conduit 1c. The conduit 1 c has convex portions and concave portions which are alternately provided along an axis direction and which continue 360° in a circumferential direction, and has a bellows-like outer shape.

In Fig. 2, the first ceramic structure 2 is arranged around the conduit 1c constituting the conduit structure 1 for molten glass, and the second ceramic structure 3 is located around the first ceramic structure 2.

In the case of the structure that the vertical pipe and the horizontal pipe are communicated with each other as shown in Fig. 1, when the difference in a coefficient of thermal expansion between the conduits (the vertical pipe 1a and the horizontal pipe 1b) constituting the conduit structure 1 for molten glass and the ceramic structure arranged around the conduits is large, the difference in the amount of thermal expansion when heating or the difference in the amount of shrinkage when cooling cannot be absorbed by the elongation of a pipe material, and there is a possibility that cracks occur at the junction between the vertical pipe 1a and the horizontal pipe 1b. For this reason, it is preferred to apply the present invention that the difference in a coefficient of thermal expansion between the conduits constituting the conduit structure 1 for molten glass and the first ceramic structure 2 arranged around the conduits is small and the occurrence of cracks in the conduits constituting the conduit structure 1 for molten glass due to thermal expansion when heating or shrinkage when cooling can be suppressed.

Furthermore, in the periphery of the junction between the vertical pipe 1a and the horizontal pipe 1b, a gap is easily generated between the conduits (vertical pipe 1a and horizontal tube 1b) and the ceramic structure such as refractory brick arranged around the conduits, and the conduits deform by expansion pressure applied from molten glass and may break. Therefore, it is preferred to apply the present invention that a gap between the conduits (vertical pipe 1a and horizontal pipe 1b) constituting the conduit structure 1 for molten glass and the first ceramic structure 2 arranged around the conduits is extremely small and the deformation of the conduits due to expansion pressure applied from molten glass can be suppressed.

Even in the structure that the vertical pipe is communicated with the horizontal pipe as shown in Fig. 1, the structure is not limited to the embodiment shown in the drawing, and the structure may be that one horizontal pipe is communicated with one vertical pipe. The structure may further be that one end side of one horizontal pipe is communicated with one vertical pipe and other end side of the horizontal pipe is communicated with other one vertical pipe. The structure may further be that at least one vertical pipe or horizontal pipe, or both are communicated with such a structure.

The vertical pipe in the present invention is not always required that its center axis has a vertical direction in a strict sense. The center axis may be inclined to a vertical direction. The same applies to the horizontal pipe, and its center axis is not always required to have a horizontal direction in a strict sense. The center axis may be inclined to some extent to the horizontal direction. In short, the vertical pipe and horizontal pipe in the present invention have an intention of the relative relationship of those pipes, and in the case that one conduit is a vertical pipe, the conduit having the relationship intersecting with the vertical pipe is a horizontal pipe.

In the case that the conduit constituting the conduit structure for molten glass has a shape having irregularities as the conduit 1c shown in Fig. 2, a gap is easily generated between the conduit and the ceramic structure such as refractory brick arranged around the conduit is likely to deform by expansion pressure applied from molten glass, leading to breakage thereof. For this reason, it is preferred to apply the present invention that a gap between the conduit 1 c constituting the conduit structure 1 for molten glass and the first ceramic structure 2 provided around the conduit 1 c is extremely small and the deformation of the conduit by expansion pressure applied from molten glass can be suppressed.

Even in the case of having only one conduit as shown in Fig. 2, the conduit is not limited to the shape that convex portions and concave portions are alternately provided along an axis direction, which continue 360° in a circumferential direction, as shown in Fig. 2. The conduit may have either one of convex portions and concave portions, and may be an ordinary straight pipe that does not have convex portion and concave portion.

A stirrer for stirring molten glass may be provided in the inside of the conduit constituting the conduit structure for molten glass.

In the case that a stirrer for stirring molten glass is provided in the inside of the conduit constituting the conduit structure for molten glass, the conduit is likely to deform by expansion pressure applied from molten glass, leading to breakage thereof. For this reason, it is preferred to apply the present invention that a gap between the conduit constituting the conduit structure for molten glass and the first ceramic structure provided around the conduit is extremely small and the deformation of the conduit by expansion pressure applied from molten glass can be suppressed.

In the present invention, the conduits (vertical pipe 1a and horizontal pipe 1b in Fig. 1, and conduit 1c in Fig. 2) constituting the conduit structure 1 for molten glass are used as a conduit for molten glass. Therefore, the constituent material is required to have excellent heat resistance and corrosion resistance to molten glass. For this reason, the conduits (vertical pipe 1a and horizontal pipe 1b in Fig. 1, and conduit 1c in Fig. 2) constituting the conduit structure 1 for molten glass comprise platinum or a platinum alloy such as platinum-gold alloy, platinum-rhodium alloy or platinum-iridium alloy.

Platinum or the platinum alloy constituting the conduits (vertical pipe 1 a and horizontal pipe 1b in Fig. 1, and conduit 1c in Fig. 2) constituting the conduit structure 1 for molten glass preferably comprises a reinforced platinum comprising platinum or a platinum alloy, and metal oxide particles such as Al₂O₃, ZrO₂ or Y₂O₃ dispersed therein. The reinforced platinum produces the effect that the metal oxide particles dispersed in platinum or a platinum alloy prevents dislocation and growth of crystal grains, thereby mechanical strength is enhanced. However, in the meanwhile, ductility of a material is decreased as compared with platinum or a platinum alloy. Therefore, the difference in the amount of thermal expansion when heating or the difference in the amount of shrinkage when cooling, between the conduit constituting the conduit structure 1 for molten glass and the ceramic structure such as an insulting brick arranged around the conduit cannot be absorbed by elongation of a pipe material, and cracks are likely to occur in the conduit. For this reason, it is preferred to apply the present invention that the occurrence of cracks in the conduits constituting the conduit structure 1 for molten glass due to thermal expansion when heating or shrinkage when cooling can be suppressed.

In the present invention, the first ceramic structure 2 contains 75 wt% or more of a zirconium oxide in terms of mass percentage of the entire composition, wherein the proportion of cubic zirconia in the zirconium oxide is 80 wt% or more. In other words, the first ceramic structure 2 mainly comprises cubic zirconia that is fully stabilized zirconia.

When the first ceramic structure 2 mainly comprises cubic zirconia, the amount of thermal expansion when heating or the amount of shrinkage when cooling, of the conduits constituting the conduit structure 1 for molten glass nearly equals to that of the first ceramic structure 2 provided around the conduits. As a result, the difference in the amount of thermal expansion when heating or the amount of shrinkage when cooling becomes extremely small, and this prevents the occurrence of cracks in the conduits constituting the conduit structure 1 for molten glass due to thermal expansion when heating or shrinkage when cooling, for example, the occurrence of cracks at the junction between the vertical pipe 1a and the horizontal pipe 1b in Fig. 1.

The cubic zirconia that is fully stabilized zirconia has a coefficient of linear thermal expansion extremely close to that of platinum or the platinum alloy constituting the conduits at 20 to 1,000°C as shown below.
Platinum or platinum alloy: 9.5×10⁻⁶/°C to 11×10⁻⁶/°C
Cubic zirconia: 8.5×10⁻⁶/°C to 10.5×10⁻⁶/°C

Incidentally, the zirconium oxide such as cubic zirconia has excellent heat resistance, corrosion resistance to molten glass, and corrosion resistance to a corrosive gas, and is therefore suitable as the first ceramic structure 2 arranged around the conduits (vertical pipe 1a and horizontal pipe 1b in Fig. 1, and conduit 1c in Fig. 2) constituting the conduit structure 1 for molten glass.

To achieve the above effect, the coefficient of linear thermal expansion at 20 to 1,000°C of the ceramic structure is 8×10⁻⁶ to 12×10⁻⁶/°C, preferably 9×10⁻⁶ to 11×10⁻⁶/°C, and more preferably 9.5×10⁻⁶ to 10.5×10⁻⁶/°C.

However, the coefficient of linear thermal expansion of platinum or a platinum alloy somewhat differs depending on composition. Therefore, it is preferred to select the coefficient of linear thermal expansion of the first ceramic structure 2 depending on the coefficient of linear thermal expansion of platinum or the platinum alloy used in the conduits (vertical pipe 1a and horizontal pipe 1b in Fig. 1, and conduit 1c in Fig. 2) constituting the conduit structure 1 for molten glass. Specifically, the coefficient of linear thermal expansion at 20 to 1,000°C of the first ceramic structure 2 is preferably within ±15%, more preferably within ±10%, and still more preferably within ±5%, of the coefficient of linear thermal expansion at 20 to 1,000°C of the platinum or platinum alloy used in the conduits (vertical pipe 1a and horizontal pipe 1b in Fig. 1, and conduit 1c in Fig. 2) constituting the conduit structure 1 for molten glass.

To achieve the above coefficient of linear thermal expansion, the amount of a zirconium oxide contained in the first ceramic structure 2 is required to be 75 wt% or more, and the proportion of cubic zirconia in the zirconium oxide is required to be 80 wt% or more. The proportion of the cubic zirconia in the zirconium oxide contained in the first ceramic structure 2 is preferably 85 wt% or more, and more preferably 90 wt% or more.

In the present invention, the first ceramic structure 2 has an average open porosity of 25 to 60%. The first ceramic structure 2 having the above composition has excellent corrosion resistance to molten glass, but in the case where the average open porosity exceeds 60%, corrosion resistance to molten glass is deteriorated. On the other hand, in the case where the average open porosity is less than 25%, thermal shock resistance of the first ceramic structure 2 is deteriorated. Furthermore, heat capacity is increased. As a result, deviation is easily occurred in the timing of thermal expansion when heating or shrinkage when cooling between the conduits (vertical pipe 1 a and horizontal pipe 1b in Fig. 1, and conduit 1c in Fig. 2) constituting the conduit structure 1 for molten glass and the first ceramic structure 2, and there is a possibility that cracks occur in the conduits constituting the conduit structure 1 for molten glass. Additionally, longer time is required for heating or cooling.

The first ceramic structure 2 is that the average open porosity is preferably 30 to 50%, and more preferably 35 to 45%.

The average open porosity of the first ceramic structure 2 can be obtained by the measurement with Archimedes method or mercury porosimeter.

The first ceramic structure 2 is that the open porosity may differ depending on a region. For example, when the open porosity of the region facing the conduits (vertical pipe 1a and horizontal pipe 1b in Fig. 1, and conduit 1c in Fig. 2) constituting the conduit structure 1 for molten glass is lower than that of other region, corrosion resistance to molten glass can be enhanced.

In Figs. 1 and 2, a gap is not present between the conduits (vertical pipe 1 a and horizontal pipe 1b in Fig. 1, and conduit 1c in Fig. 2) constituting the conduit structure 1 for molten glass and the first ceramic structure 2.

As described above, where a gap is present between the conduits (vertical pipe 1a and horizontal pipe 1b in Fig. 1, and conduit 1c in Fig. 2) constituting the conduit structure 1 for molten glass and the first ceramic structure 2, the conduits are likely to deform by expansion pressure applied from molten glass, leading to breakage thereof.

In the case where a gap is not present between the conduits (vertical pipe 1 a and horizontal pipe 1b in Fig. 1, and conduit 1c in Fig. 2) constituting the conduit structure 1 for molten glass and the first ceramic structure 2, the deformation of the conduit by expansion pressure applied from molten glass can be suppressed.

However, it is sufficient in the present invention if a gap between the conduits (vertical pipe 1a and horizontal pipe 1b in Fig. 1, and conduit 1c in Fig. 2) constituting the conduit structure 1 for molten glass and the first ceramic structure 2 is extremely small, specifically, the gap is less than 0.5 mm.

The gap between the conduits (vertical pipe 1a and horizontal pipe 1b in Fig. 1, and conduit 1c in Fig. 2) constituting the conduit structure 1 for molten glass and the first ceramic structure 2 is preferably 0.4 mm or less, and more preferably 0.2 mm. Still more preferably, the gap is not present.

To suppress the deformation of the conduits constituting the conduit structure 1 for molten glass due to expansion pressure applied from molten glass, the first ceramic structure 2 is required to have sufficient compression strength in a temperature region when molten glass passes through the conduits. Specifically, the first ceramic structure 2 has compression strength at 1,400°C of preferably 5 MPa or more, more preferably 8 MPa or more, and still more preferably 10 MPa or more. The reason of compression strength at 1,400°C is that the temperature is a temperature at which the first ceramic structure 2 generally undergoes when molten glass passes through the conduits.

In the present invention, a thickness d of the first ceramic structure 2 is preferably from 15 to 50 mm. In the case where the thickness d of the first ceramic structure 2 is less than 15 mm, the amount of thermal expansion when heating or the amount of shrinkage when cooling, of the first ceramic structure 2 is hindered by the second ceramic structure 3. As a result, the difference in the amount of thermal expansion when heating or the amount of shrinkage when cooling becomes large between the conduits (vertical pipe 1a and horizontal pipe 1b in Fig. 1, and conduit 1c in Fig. 2) constituting the conduit structure 1 for molten glass and the first ceramic structure 2, and there is a possibility that cracks occur in the conduits constituting the conduit structure 1 for molten glass.

Moreover, in the case where the thickness d of the first ceramic structure 2 is less than 15 mm, when a gap between the conduits constituting the conduit structure 1 for molten glass and the second ceramic structure 3 is filled with a slurry body and the first ceramic structure 2 is formed by sintering the slurry body in the procedures described hereinafter, there is a possibility that workability is deteriorated.

Since cubic zirconia is an expensive material, it is preferred from the standpoint of costs that the first ceramic structure 2 keeps the thickness at a minimum. From this standpoint, the thickness d of the first ceramic structure 2 is preferably 50 mm or less.

On the other hand, in the case where the thickness d of the first ceramic structure 2 is larger than 50 mm, there is a possibility that temperature difference occurs in a thickness direction of the first ceramic structure 2 when molten glass passes through the conduits.

The thickness d of the first ceramic structure 2 is more preferably from 20 to 40 mm, and still more preferably from 25 to 35 mm.

Incidentally, in the case where the conduit constituting the conduit structure 1 for molten glass has irregularities as the conduit 1c in Fig. 2, the thickness is required to satisfy the above range in all regions of the first ceramic structure 2 facing the irregularities of the conduit 1c.

Since the gap between the conduits constituting the conduit structure 1 for molten glass and the second ceramic structure 3 is filled with a slurry body, and the first ceramic structure 2 is formed by sintering the slurry body, the second ceramic structure 3 is positioned around the first ceramic structure 2.

The second ceramic structure 3 can use an insulating brick mainly comprising at least one selected from the group consisting of alumina, magnesia, zircon and silica.

Specific examples of the insulating brick used as the second ceramic structure 3 include silica-alumina insulating brick, zirconia insulating brick and magnesia insulting brick. Commercially available products of the insulating brick include SP-15 (manufactured by Hinomaru Yogyo Co., Ltd.) and LBK3000 (manufactured by Isolite Insulating Products Co., Ltd.).

A method for producing the molten glass conveying equipment element of the present invention is described below.

In the present invention, a gap between the conduits (vertical pipe 1 a and horizontal pipe 1b in Fig. 1, and conduit 1c in Fig. 2) constituting the conduit structure 1 for molten glass and the first ceramic structure 2 is required to be less than 0.5 mm. However, in the case where the insulating brick mainly comprising cubic zirconia that is fully stabilized zirconia is arranged around the conduits constituting the conduit structure 1 for molten glass, the above gap cannot be achieved.

For this reason, in the present invention, the gap between the conduits (vertical pipe 1a and horizontal pipe 1b in Fig. 1, and conduit 1c in Fig. 2) constituting the conduit structure 1 for molten glass and the second ceramic structure 3 is filled with a slurry body containing stabilized zirconia particles satisfying the composition of the first ceramic structure 2 (that is, a zirconium oxide is 75 wt% or more, the proportion of cubic zirconia in the zirconium oxide is 80 wt% or more), and the first ceramic structure 2 is formed by sintering the slurry body.

The stabilized zirconia particles contained in the slurry body used must be selected such that the gap between the first ceramic structure 2 after formation and the conduits (vertical pipe 1a and horizontal pipe 1b in Fig. 1, and conduit 1c in Fig. 2) constituting the conduit structure 1 for molten glass is less than 0.5 mm, and the first ceramic structure 2 after formation has sufficient compression strength in a temperature range when molten glass passes through the conduits.

To reduce the gap between the first ceramic structure 2 after formation and the conduits (vertical pipe 1a and horizontal pipe 1b in Fig. 1, and conduit 1c in Fig. 2) constituting the conduit structure 1 for molten glass, it is necessary to reduce the dimensional change (shrinkage) during sintering of the slurry body. To achieve this, the slurry body containing stabilized zirconia particles having large particle size is used.

However, in the case where the slurry body containing only stabilized zirconia particles having large particle size is used, junction area among particles is small, and as a result, compression strength of a sintered body, i.e., the first ceramic structure 2, is decreased.

On the other hand, in the case where the slurry body containing stabilized zirconia particles having small particle size is used, those particles bind so as to reinforce junction points of large particles. Therefore, compression strength of the sintered body, that is, the first ceramic structure 2, is enhanced.

However, in the case where the slurry body containing only stabilized zirconia particles having small particle size is used, dimensional change (shrinkage) of the slurry body when sintering is increased, and as a result, the gap between the first ceramic structure 2 after formation and the conduits (vertical pipe 1a and horizontal pipe 1b in Fig. 1, and conduit 1c in Fig. 2) constituting the conduit structure 1 for molten glass becomes large.

In the present invention, as described hereinafter, by using the slurry body containing two kinds of stabilized zirconia particles having different particle size in specific proportions, the gap between the first ceramic structure 2 after formation and the conduits (vertical pipe 1a and horizontal pipe 1b in Fig. 1, and conduit 1c in Fig. 2) constituting the conduit structure 1 for molten glass is set to less than 0.5 mm, and the first ceramic structure 2 after formation has sufficient compression strength in a temperature range when molten glass passes through the conduits.

More specifically, the present invention uses the slurry body in which first stabilized zirconia particles having a median diameter D50 of 0.2 to 5 µm and second stabilized zirconia particle having a median diameter D50 of 0.2 to 2 mm are blended in such a way that the ratio of the mass of the first stabilized zirconia particles to the mass of the second stabilized zirconia particles is 0.3 to 0.6.

In the slurry body, when the second stabilized zirconia particles having large median diameter D50 constitute a framework of a sintered body, the first stabilized zirconia particles having small median diameter D50 reinforce junction points of the large particles constituting a framework of the sintered body while suppressing dimensional change (shrinkage) when sintering. As a result, compression strength of the sintered body, that is, the first ceramic structure 2, is enhanced.

Incidentally, it is important in the first stabilized zirconia particles and the second stabilized zirconia particles that not only a particle size merely differs to each other, but the median diameter D50 falls within the range described above.

In the case where the median diameter D50 of the first stabilized zirconia particles is less than 0.2 µm, powder aggregation is easily occurred, and the particles cannot be uniformly dispersed. As a result, regions in which junction points of framework particles of the sintered body are not reinforced remain, and as a result, compression strength of the sintered body, that is, the first ceramic structure 2, is deteriorated.

In the present invention, two kinds of stabilized zirconia particles having different median diameter D50 are blended to form a slurry body. Therefore, it is preferred that the first stabilized zirconia particles having small median diameter D50 are mixed in a ball mill together with ion-exchanged water, a pH regulator, and an organic binder added as necessary to form a slurry precursor, and the slurry precursor is then mixed with the second stabilized zirconia particles having large median diameter D50 by a planetary mixer to form a slurry body.

In the case where the median diameter D50 of the first stabilized zirconia particles exceeds 5 µm, the first stabilized zirconia particles settle down in preparing the slurry precursor in the procedures described above. As a result, good slurry precursor (slurry precursor having zirconia particles uniformly dispersed therein) cannot be obtained.

Furthermore, even in the case where the slurry precursor has been obtained, the junction points of framework particles of the sintered body cannot be sufficiently reinforced in sintering the slurry body prepared using the slurry precursor, and many voids are present in the sintered body. As a result, compression strength of the sintered body, that is, the first ceramic structure 2, is deteriorated.

The first stabilized zirconia particles are that the median diameter D50 is preferably 0.5 to 4 µm, and more preferably 1 to 3 µm.

The first stabilized zirconia particles are that cumulative undersize 90% diameter (D90) is 10 µm or less is preferred to maintain uniformity of slurry and enhance compression strength of the sintered body. The D90 is more preferably 8 µm or less.

In the case where the median diameter D50 of the second stabilized zirconia particles is less than 0.2 mm, dimensional change (shrinkage) when sintering is increased.

On the other hand, in the case where the median diameter D50 of the second stabilized zirconia particles exceeds 2 mm, the first stabilized zirconia particles and the second stabilized zirconia particles are not uniformly dispersed in mixing the slurry precursor containing the first stabilized zirconia particles with the second stabilized zirconia particles by a planetary mixer, and the slurry body having a desired composition cannot be obtained.

Furthermore, even in the case where the slurry body has been obtained, junction area as framework particles of the sintered body is decreased in sintering the slurry body, and compression strength of the sintered body, that is, the first ceramic structure 2, is deteriorated.

The second stabilized zirconia particles are that the median diameter D50 is preferably 0.25 to 1.75 mm, and more preferably 0.5 to 1.5 mm.

The second stabilized zirconia particles are that cumulative undersize 10% diameter (D10) is preferably 0.1 mm or more to suppress dimensional change (shrinkage) when sintering and to enhance compression strength of the sintered body. The D10 is more preferably 0.2 mm or more.

In the slurry body, in the case where the mass ratio of the first stabilized zirconia particles to the second stabilized zirconia particles is smaller than 0.3, junction points of coarse particles that are framework particles of the sintered body cannot be sufficiently reinforced in sintering the slurry body, and compression strength of the sintered body, that is, the first ceramic structure 2, is deteriorated.

On the other hand, in the slurry body, in the case where the mass ratio of the first stabilized zirconia particles to the second stabilized zirconia particles is larger than 0.6, dimensional change (shrinkage) when sintering is increased.

In the slurry body, the mass ratio of the first stabilized zirconia particles to the second stabilized zirconia particles is preferably 0.35 to 0.55, and more preferably 0.4 to 0.5.

In the present invention, the first ceramic structure 2 is formed by filling the gap between the conduits (vertical pipe 1a and horizontal pipe 1b in Fig. 1, and conduit 1c in Fig. 2) constituting the conduit structure 1 for molten glass and the second ceramic structure 3 with a slurry body and sintering the slurry body. Therefore, the first stabilized zirconia particles and the second stabilized zirconia particles, contained in the slurry body are required to have the same composition as that of the first ceramic structure described above.

For this reason, the first stabilized zirconia particles and the second stabilized zirconia particles contain a zirconium oxide in an amount of 75 wt% or more in terms of mass% to the respective entire compositions, and the proportion of cubic zirconia in the zirconium oxide is 80 wt% or more.

The first stabilized zirconia particles and the second stabilized zirconia particles contain a stabilizer added to convert a zirconium oxide into cubic zirconia that is stabilized zirconia as the remainder excluding the zirconium oxide. The remainder can include unavoidable impurities and the like. Moreover, the first stabilized zirconia particles and the second stabilized zirconia particles may contain other components other than the zirconium oxide and the stabilizer in the total amount of about 8 wt% or less so long as those do not affect the present invention. Examples of the other components include Al₂O₃ and MgO that are added to improve sinterability. Those can be contained in the total amount of about 5 wt% or less.

The stabilizer includes yttrium oxide, cerium oxide, magnesium oxide, calcium oxide and erbium oxide. Yttrium oxide and cerium oxide are preferred for the reasons that those have excellent corrosion resistance to molten glass, are easily available and are stable even though those are held at high temperature for a long period of time.

In the case where at least one of stabilizers selected from the group consisting of yttrium oxide and cerium oxide is contained, the total content of those is preferably 6 wt% or more, more preferably 8 wt% or more, and still more preferably 10 wt% or more.

However, in the case where the amount of the stabilizer added is too large, there are problems that sintering becomes difficult and cost for raw materials is increased. For this reason, the total content of those is preferably 25 wt% or less, and more preferably 20 wt% or less.

The content of zirconium oxide in the first stabilized zirconia particles and the second stabilized zirconia particles differs depending on the amount of the stabilizer added. However, to fall a coefficient of thermal expansion within a given range, the content of the zirconium oxide is 75 wt% or more, preferably 80 wt% or more, and more preferably 85% or more. On the other hand, the upper limit of the content of the zirconium oxide in the first stabilized zirconia particles and the second stabilized zirconia particles is about 94 wt% from the balance with the amount of the stabilizer added.

In the present invention, to form a slurry body by blending two kinds of stabilized zirconia particles having different median diameter D50, the first stabilized zirconia particles having small median diameter D50 are mixed in a ball mill together with ion-exchanged water, a pH regulator and an organic binder added as necessary to form a slurry precursor, and the slurry precursor is then mixed with the second stabilized zirconia particles having large median diameter D50 by a planetary mixer to form a slurry body.

As described above, in the present invention, to form a slurry body by blending the first stabilized zirconia particles and the second stabilized zirconia particles, having different median diameter D50 each other, it is preferred that the first stabilized zirconia particles having small median diameter D50 are mixed in a ball mill together with ion-exchanged water, a pH regulator and an organic binder added as necessary to form a slurry precursor, and the slurry precursor is then mixed with the second stabilized zirconia particles having large median diameter D50 in a planetary mixer to form the slurry body.

However, a method for preparing the slurry body is not limited to the above method, and a method for mixing a powder or a slurry generally known can be used.

The reason that a pH regulator is used in preparing a slurry precursor in the above-described method for preparing the slurry body is that pH must be adjusted to weak alkalinity (about pH 7 to 9) to uniformly disperse the first stabilized zirconia particles in ion-exchanged water.

CaO, ammonia, potassium carbonate and the like can be used as the pH regulator. Of those, CaO is preferably used for the reasons that CaO is easily handled and the residues after heating is small.

In the case where CaO is used as the pH regulator, the amount of CaO is preferably 0.01 to 0.2 wt%, more preferably 0.02 to 0.1 wt%, and still more preferably 0.03 to 0.5, in terms of mass% based on the entire composition of the slurry body.

As necessary, an organic binder is blended with the slurry body to improve handling property at ordinary temperature.

Methyl cellulose, liquid paraffin, polyethylene glycol and the like can be used as the organic binder. The organic binder having methyl cellulose as a component includes METOLOSE, product name, manufactured by Shin-Etsu Chemical Co., Ltd.

The organic binder burns and flies apart when sintering the slurry body. Therefore, in the case where the blending amount of the organic binder is too large, the organic binder remains as carbon after burning.

For this reason, the blending amount of the organic binder is preferably 0.5 wt% or less, more preferably 0.3 wt% or less, and still more preferably 0.2 wt% or less, in terms of mass% based on the entire composition of the slurry body.

The blending proportion of the zirconia particles (first stabilized zirconia particles and second stabilized zirconia particles) in the slurry body and ion-exchanged water is selected in the light of filling property of a slurry body, that is, filling property when filling the slurry body into a gap between the conduits (vertical pipe 1a and horizontal pipe 1b in Fig. 1, and conduit 1c in Fig. 2) constituting the conduit structure 1 for molten glass and the second ceramic structure 3, and handling property at ordinary temperature.

The blending proportion of the zirconia particles (first stabilized zirconia particles and second stabilized zirconia particles) in the slurry body and ion-exchanged water is preferably 8 to 25 wt%, more preferably 10 to 20 wt%, and still more preferably 12 to 18 wt%, in terms of mass% of the zirconia particles to the total mass of the zirconia particles (first stabilized zirconia particles and second stabilized zirconia particles) and the ion-exchanged water.

After filling the gap between the conduits (vertical pipe 1 a and horizontal pipe 1b in Fig. 1, and conduit 1c in Fig. 2) constituting the conduit structure 1 for molten glass and the second ceramic structure 3 with a slurry body, the slurry body is dried in air to remove the ion-exchanged water contained therein.

Thereafter, the slurry body is sintered at a temperature of 1,200 to 1,700°C.

In the case where the temperature is lower than 1,200°C, the first stabilized zirconia particles and second stabilized zirconia particles contained in the slurry body are not sintered. In the case where the temperature exceeds 1,700°C, there is a possibility that strength of the conduits (vertical pipe 1a and horizontal pipe 1b in Fig. 1, and conduit 1c in Fig. 2) comprising platinum or a platinum alloy constituting the conduit structure 1 for molten glass is deteriorated.

The sintering temperature of the slurry body is preferably 1,250 to 1,600°C, and more preferably 1,300 to 1,500°C.

In the present invention, in order that the gap between the conduits (vertical pipe 1a and horizontal pipe 1b in Fig. 1, and conduit 1c in Fig. 2) constituting the conduit structure 1 for molten glass and the first ceramic structure 2 is less than 0.5 mm, dimensional change (shrinkage) of the slurry body when sintering is required to be small. Regarding this point, volume decreasing rate before and after sintering is preferably 10% or less, more preferably 7% or less, and still more preferably 4% or less. In other words, volume fraction before and after sintering ((volume after heating/volume before heating)×100) is preferably 90% or more, more preferably 93% or more, and still more preferably 96% or more.

In the present invention, in order to suppress the deformation of the conduits constituting the conduit structure 1 for molten glass due to expansion pressure applied from molten glass, the sintered body is required to have sufficient compression strength in a temperature region when molten glass passes through the conduits. Specifically, the compression strength of the sintered body at 1,400°C is 5 MPa or more, more preferably 8 MPa or more, and still more preferably 10 MPa or more.

The glass manufacturing apparatus of the present invention uses the molten glass conveying equipment element of the present invention as at least a part of flow passage of molten glass. One example of the glass manufacturing apparatus of the present invention includes a vacuum degassing apparatus using the glass manufacturing apparatus of the present invention as at least a part of flow passage of molten glass. The glass manufacturing apparatus of the present invention is not particularly limited so long as the molten glass conveying equipment element of the present invention is used as at least a part of flow passage of molten glass, and may be an apparatus containing an upstream glass melting tank and a downstream sheet glass forming equipment (for example, float bath).

Molten glass used in the present invention is preferably an alkali-free glass having a melting point about 100°C higher than that of a soda-lime glass. An alkali-free glass containing, as represented by mass percentage on the basis of oxides:
SiO₂: 50 to 73%,
Al₂O₃: 10.5 to 24%,
B₂O₃: 0 to 12%,
MgO: 0 to 8%,
CaO: 0 to 14.5%,
SrO: 0 to 24%,
BaO: 0 to 13.5%, and
ZrO₂: 0 to 5%,
provided that MgO+CaO+SrO+BaO is 8 to 29.5%.

In the case where a strain point is high and melting performance is considered, preferably an alkali-free glass containing, as represented by mass percentage on the basis of oxides:
SiO₂: 58 to 66%,
Al₂O₃: 15 to 22%,
B₂O₃: 5 to 12%,
MgO: 0 to 8%,
CaO: 0 to 9%,
SrO: 3 to 12.5%, and
BaO: 0 to 2%,
provided that MgO+CaO+SrO+BaO is 9 to 18%.

In the case of particularly considering melting performance, preferably an alkali-free glass containing, as represented by mass percentage on the basis of oxides:
SiO₂: 50 to 61.5%,
Al₂O₃: 10.5 to 18%,
B₂O₃: 7 to 10%,
MgO: 2 to 5%,
CaO: 0 to 14.5%,
SrO: 0 to 24%, and
BaO: 0 to 13.5%,
provided that MgO+CaO+SrO+BaO is 16 to 29.5%.

In the case of particularly considering high strain point, preferably an alkali-free glass containing, as represented by mass percentage on the basis of oxides:
SiO₂ 56 to 70%,
Al₂O₃: 14.5 to 22.5%,
B₂O₃: 0 to 2%,
MgO: 0 to 6.5%,
CaO: 0 to 9%,
SrO: 0 to 15.5%, and
BaO: 0 to 2.5%,
provided that MgO+CaO+SrO+BaO is 10 to 26%.

In the case of particularly considering high strain point and melting performance, preferably an alkali-free glass containing, as represented by mass percentage on the basis of oxides:
Si0₂: 54 to 73%,
Al₂O₃: 10.5 to 22.5%,
B₂O₃: 1.5 to 5.5%,
MgO: 0 to 6.5%,
CaO: 0 to 9%,
SrO: 0 to 16%, and
BaO: 0 to 2.5%,
provided that MgO+CaO+SrO+BaO is 8 to 25%.

### EXAMPLES

### (Test Examples 1 to 7)

Fully stabilized zirconia particles F1, F2 and F3 having a median diameter D50 of 15 µm (D90: 45 µm), 0.96 µm (D90: 1.8 µm) and 0.15 µm (D90: 0.9 µm), respectively, were prepared as first particles. Incidentally, of those particles, particles F2 satisfy the median diameter D50 of the first stabilized zirconia particles in the present invention. The particles F1, F2 and F3 all contain 12 mass% of yttrium oxide as a stabilizer. The content of zirconium oxide was 87 wt%, and the proportion of cubic zirconia in the zirconium oxide was 95 wt%.

Particles F1, F2 and F3: 76.85%, ion-exchanged water: 23%, CaO (pH regulator): 0.05%, and METOLOSE (organic binder, manufactured by Shin-Etsu Chemical Co., Ltd.): 0.1 %, in mass ratio were blended, and the resulting blend was mixed in a ball mill for 3 hours using zirconia pot and balls to prepare a slurry precursor.

In the case where particles F1 having median diameter D50 exceeding 5 µm were used, solid content easily settled down, and good slurry precursor (slurry precursor in which zirconia particles had been uniformly dispersed) was not formed. Therefore, such a slurry precursor was not subjected to the subsequent processes.

Fully stabilized zirconia particles C1, C2 and C3 having a median diameter D50 of 3.15 mm (D10: 0.8 mm), 0.42 mm (D10: 0.22 mm) and 0.08 mm (D10: 0.02 mm), respectively, were prepared as second particles. Incidentally, of those particles, particles C2 satisfy the median diameter D50 of the second stabilized zirconia particles in the present invention. The particles C1, C2 and C3 all contain 12 mass% of yttrium oxide as a stabilizer. The content of zirconium oxide was 87 wt%, and the proportion of cubic zirconia in the zirconium oxide was 95 wt%.

The slurry precursor obtained by the above procedures was mixed with the particles C1, C2 and C3 for 20 minutes using a planetary mixer so as to be mass ratio shown in the Table below, and then a slurry body was obtained.

In the case where the particles C1 having a median diameter D50 exceeding 2 mm were used, the particles C1 and the particles F2 and F3 were not uniformly dispersed. Therefore, the slurry body was not subjected to the subsequent processes.

A cylindrical mold having an inner diameter of 25 mm and a height of 30 mm is filled with five kinds of the slurry bodies prepared by the above procedures, dried in the atmosphere for 10 hours, and then dried for 2 hours using a thermostat chamber heated to 80°C. After drying, the mold was removed to obtain the respective columnar samples. Each columnar sample was maintained in the atmosphere at 1,400°C for 10 hours to sinter the slurry body, followed by cooling. External dimensions of each sample were measured to calculate volume fraction ((volume after heating/volume before heating)×100) (%). Furthermore, compression strength (MPa) of the columnar sample in the atmosphere at 1,400°C was measured in the following procedures.

### (Measurement method of compression strength)

Compression strength was measured by compressing a columnar sample in a furnace (air atmosphere) through an alumina jig using a portal universal tester (manufactured by Shimadzu Corporation; Autograph). Moving speed of a crosshead was 2 mm/min, and the maximum load was defined as compression strength.

The results obtained by those measurements are shown in the Table below.

**[Table 1]**

| | First particles | Second particles | Mass ratio (first particles/second particles) | Volume fraction after heating | 1,400°C compression strength (MPa) |
|---|---|---|---|---|---|
| Test Example 1 | F2 | C2 | 0.45 | 98.5 | 11.5 |
| Test Example 2 | F2 | C2 | 0.55 | 94.5 | 13 |
| Test Example 3 | F2 | C2 | 0.35 | 98.5 | 11 |
| Test Example 4 | F2 | C2 | 0.2 | 98.8 | 2.1 |
| Test Example 5 | F2 | C2 | 0.8 | 86.7 | 14.5 |
| Test Example 6 | F2 | C3 | 0.5 | 75.5 | 8 |
| Test Example 7 | F3 | C2 | 0.5 | 96.6 | 3.7 |

In all of Examples 1 to 7, an average open porosity was 40 to 60%, and a coefficient of linear thermal expansion at 20 to 1,000°C was 8×10⁻⁶ to 12×10⁻⁶/°C.

In all of Test Examples 1 to 3 in which the particle F2 and the particle C2 are used as the first particles and the second particles, respectively, and the mass ratio of those (first particles/second particles) satisfies 0.3 to 0.6, dimensional change (shrinkage) when sintering was small and volume fraction after heating was 90% or more, and further, the compression strength at 1,400°C was 10 MPa or more.

On the other hand, in Test Example 4 in which the mass ratio of those (first particles/second particles) is smaller than 0.3, the compression strength at 1,400°C was low as 2.1 MPa.

Moreover, in Test Example 5 in which the mass ratio (first particles/second particles) of those is larger than 0.6, dimensional change (shrinkage) when sintering was large and the volume fraction after heating was less than 90%.

In Test Example 6 in which the particles C3 having median diameter D50 smaller than 0.2 mm were used as the second particles, dimensional change (shrinkage) when sintering was large and the volume fraction after heating was less than 90%.

In Test Example 7 in which the particles F3 having median diameter D50 smaller than 0.2 µm were used, compression strength at 1,400°C was low as 3.7 MPa.

### (Example and Comparative Example)

In Example and Comparative Example, the conduit 1c shown in Fig. 2 was prepared. The conduit 1c is made of a platinum-rhodium alloy (rhodium: 10 mass%). The conduit 1c has convex portions and concave portions which are alternately provided along an axis direction and which continue 360° in a circumferential direction, and has a bellows-like outer shape. The conduit 1c has an overall length of 70 mm, an outer diameter of 112 mm and a thickness of 0.8 mm, difference in height between the convex portions and the concave portion is 5 mm, a distance between the adjacent convex portions (or concave portions) is 14.6 mm, and a length of a region on which the convex portions and the concave portions are formed is 58.4 mm.

In place of the second ceramic structure 3 shown in Fig. 2, a heat-resistant cast steel ring was provided outside the conduit 1c. A gap between the heat-resistant cast steel ring and the outermost diameter of the conduit 1c is 20 mm.

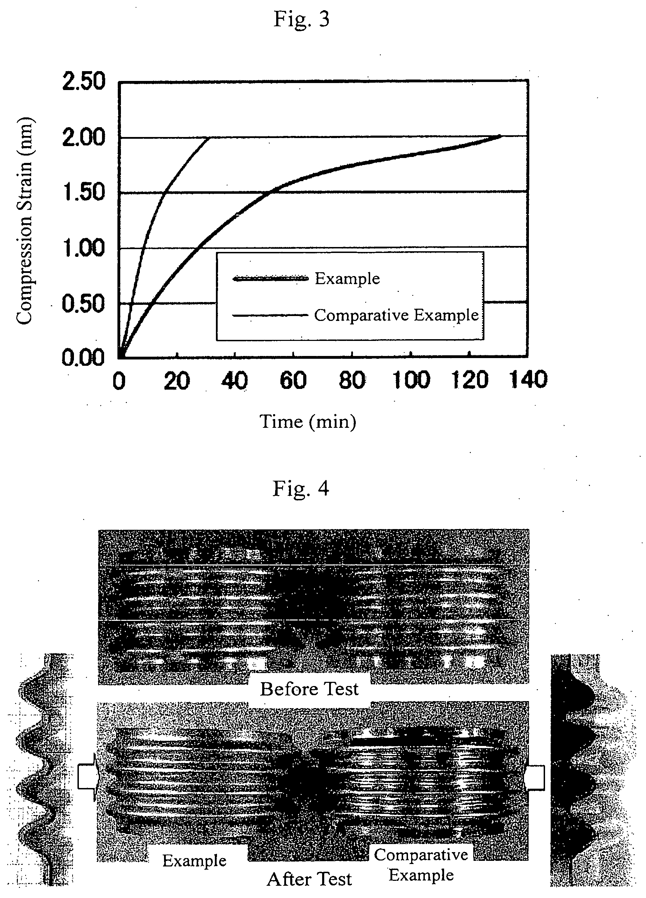

In the Example, the gap between the heat-resistant cast steel ring and the conduit 1c was densely filled with the same slurry body as the slurry body prepared in Test Example 1. On the other hand, in the Comparative Example, the commercially available alumina hollow particle caster (product name: Alfrax (manufactured by Saint-Gobain Ceramics), coefficient of linear thermal expansion at 20 to 1,000°C: 6.5× 10⁻⁶/°C, compression strength at 1,400°C: 1.2 MPa) was densely filled in the gap between the heat-resistant cast steel ring and the conduit 1 c. The specimen prepared by the above procedures was sufficiently dried, and heated to 1,300°C in an electric furnace provided in a portal universal tester to sinter the slurry body (Example). Load of 500 N was continuously applied to the specimen from the above side so as to be uniform, and pressure displacement (compression strain) generated was continuously measured. Fig. 3 is a graph showing the measurement results, and shows the relationship between loading time and compression strain.

As is apparent from Fig. 3, in the Comparative Example using the alumina hollow particle caster in which filling property is not sufficient and high temperature strength (compression strength at 1,400°C) is deficient, it is apparent that shrinkage of the conduit 1c is not suppressed. On the other hand, in the Example using the slurry body of Test Example 1, the slurry body can be filled in the gap between the heat-resistant cast steel ring and the conduit 1c without any space, dimensional change before and after heating is small, and high temperature strength (compression strength at 1,400°C) is sufficient. Therefore, shrinkage of the conduit 1 c could be suppressed. Fig. 4 is the result of observation of each conduit 1c after conducting the test described above, and difference in deformation between the Example and the Comparative Example is remarkable.

## Claims

1. A method for producing a molten glass conveying equipment element having a conduit structure for molten glass containing at least one conduit comprising platinum or a platinum alloy, a first ceramic structure provided around the conduit and a second ceramic structure located around the first ceramic structure,
wherein a gap between the conduit and the second ceramic structure is filled with a slurry body, the slurry body is prepared by blending first stabilized zirconia particles having a median diameter D50 of 0.2 to 5 µm with second stabilized zirconia particles having a median diameter D50 of 0.2 to 2 mm in such a way that the ratio of the mass of the first stabilized zirconia particles to the mass of the second stabilized zirconia particles is 0.3 to 0.6 in which each of the first stabilized zirconia particles and the second stabilized zirconia particles contain, in terms of mass% to respective entire compositions, 75 wt% or more of a zirconium oxide, and a proportion of cubic zirconia in the zirconium oxide is 80 wt% or more, and at least one of stabilizers selected from the group consisting of yttrium oxide and cerium oxide is contained in a total content of 6 to 25 wt%, and then the first ceramic structure is formed by sintering the slurry body at a temperature of 1,200 to 1,700°C.

2. The method for producing a molten glass conveying equipment element according to claim 1, wherein the conduit structure for molten glass has at least one first conduit having a center axis in a vertical direction and at least one second conduit having a center axis in a horizontal direction communicated with the first conduit.

3. The method for producing a molten glass conveying equipment element according to claim 1 or 2, including a conduit which has at least one of a convex portion and a concave portion, which continues 360° in a circumferential direction as the conduit.

4. The method for producing a molten glass conveying equipment element according to any one of claims 1 to 3, including a conduit having a stirrer provided inside thereof as the conduit.

5. The method for producing a molten glass conveying equipment element according to any one of claims 1 to 4, wherein platinum or the platinum alloy constituting the conduit is a reinforced platinum comprising platinum or the platinum alloy and a metal oxide dispersed therein.

6. The method for producing a molten glass conveying equipment element according to any one of claims 1 to 5, wherein cumulative undersize 90% diameter (D90) of the first stabilized zirconia particles is 10 µm or less and cumulative undersize 10% diameter (D10) of the second stabilized zirconia particles is 0.1 mm or more.

7. The method for producing a molten glass conveying equipment element according to any one of claims 1 to 5, wherein the second ceramic structure mainly comprises at least one selected from the group consisting of alumina, magnesia, zircon and silica.

8. A molten glass conveying equipment element produced by the method for producing a molten glass conveying equipment according to any one of claims 1 to 7,
wherein an open porosity of the first ceramic structure is 25 to 60%, a coefficient of linear thermal expansion at 20 to 1,000°C of the first ceramic structure is 8×10⁻⁶ to 12×10⁻⁶/°C, a compression strength at 1,400°C of the first ceramic structure is 5 MPa or more, and a gap between the conduit and the first ceramic structure is less than 0.5 mm.

9. The molten glass conveying equipment element according to claim 8, wherein the coefficient of linear thermal expansion at 20 to 1,000°C of the first ceramic structure is within ±15% of the coefficient of linear thermal expansion at 20 to 1,000°C of platinum or the platinum alloy constituting the conduit.

10. The molten glass conveying equipment element according to claim 8 or 9, wherein a thickness of the first ceramic structure is 15 to 50 mm.

11. The molten glass conveying equipment element according to any one of claims 8 to 10, including, as the conduit, a conduit which has at least one of a convex portion and a concave portion, which continues 360° in a circumferential direction..

12. A glass manufacturing apparatus, including the molten glass conveying equipment element according to any one of claims 8 to 11.

13. A method for producing a glass using the glass manufacturing apparatus according to claim 12.

## Patentansprüche

1. Verfahren zur Herstellung eines Förderausrüstungselements für geschmolzenes Glas, welches
eine Leitungsstruktur für geschmolzenes Glas, enthaltend mindestens eine Leitung, umfassend Platin oder eine Platinlegierung,
eine erste Keramikstruktur, bereitgestellt um die Leitung, und
eine zweite Keramikstruktur, angeordnet um die erste Keramikstruktur, aufweist,
wobei ein Spalt zwischen der Leitung und der zweiten Keramikstruktur mit einem Aufschlämmungskörper gefüllt ist, wobei der Aufschlämmungskörper durch Mischen von ersten stabilisierten Zirkonoxidteilchen mit einem Median-Durchmesser D50 von 0,2 bis 5 µm, mit zweiten stabilisierten Zirkonoxidteilchen mit einem Median-Durchmesser D50 von 0,2 bis 2 mm derart hergestellt ist, dass das Verhältnis der Masse der ersten stabilisierten Zirkonoxidteilchen zu der Masse der zweiten stabilisierten Zirkonoxidteilchen 0,3 bis 0,6 beträgt, wobei jede der ersten stabilisierten Zirkonoxidteilchen und der zweiten stabilisierten Zirkonoxidteilchen als Massenprozent, bezogen auf die entsprechenden Gesamtzusammensetzungen, 75 Gew.-% oder mehr an Zirkonoxid enthalten, und ein Verhältnis von kubischem Zirkonoxid in dem Zirkonoxid 80 Gew.-% oder mehr beträgt, und mindestens ein Stabilisator, ausgewählt aus der Gruppe, bestehend aus Yttriumoxid und Ceroxid in einem Gesamtgehalt von 6 bis 25 Gew.-% enthaltend ist, und wobei dann die erste Keramikstruktur durch Sintern des Aufschlämmungskörpers bei einer Temperatur von 1200 bis 1700°C gebildet wird.

2. Verfahren zur Herstellung eines Förderausrüstungselements für geschmolzenes Glas nach Anspruch 1, wobei die Leitungsstruktur für geschmolzenes Glas mindestens eine erste Leitung mit einer Zentralachse in einer vertikalen Richtung und mindestens eine zweite Leitung mit einer Zentralachse in einer horizontalen Richtung, welche mit der ersten Leitung kommuniziert, aufweist.

3. Verfahren zur Herstellung eines Förderausrüstungselements für geschmolzenes Glas nach Anspruch 1 oder 2, welches eine Leitung einschließt, die mindestens eines von einem konvexen Teil und einem konkaven Teil aufweist, welcher 360° in einer umlaufenden Richtung als die Leitung fortläuft.

4. Verfahren zur Herstellung eines Förderausrüstungselements für geschmolzenes Glas nach einem der Ansprüche 1 bis 3, welches eine Leitung mit einem im Inneren davon bereitgestellten Rührer als die Leitung einschließt.

5. Verfahren zur Herstellung eines Förderausrüstungselements für geschmolzenes Glas nach einem der Ansprüche 1 bis 4, wobei Platin oder die Platinlegierung, welches die Leitung aufbaut, ein verstärktes Platin ist, umfassend Platin oder die Platinlegierung und ein darin dispergiertes Metalloxid.

6. Verfahren zur Herstellung eines Förderausrüstungselements für geschmolzenes Glas nach einem der Ansprüche 1 bis 5, wobei der kumulative 90%-Untergrößen-Durchmesser (D90) der ersten stabilisierten Zirkonoxidteilchen 10 µm oder weniger beträgt und der kumulative 10%-Untergrößen-Durchmesser (D10) der zweiten stabilisierten Zirkonoxidteilchen 0,1 mm oder mehr beträgt.

7. Verfahren zur Herstellung eines Förderausrüstungselements für geschmolzenes Glas nach einem der Ansprüche 1 bis 5, wobei die zweite Keramikstruktur hauptsächlich mindestens eines, ausgewählt aus der Gruppe, bestehend aus Aluminiumoxid, Magnesiumoxid, Zirkon und Siliciumoxid umfaßt.

8. Förderausrüstungselement für geschmolzenes Glas, hergestellt durch das Verfahren zur Herstellung einer Förderausrüstung für ein geschmolzenes Glas nach einem der Ansprüche 1 bis 7, wobei eine offene Porosität der ersten Keramikstruktur 15 bis 60% beträgt, ein linearer thermischer Ausdehnungskoeffizient bei 20 bis 1000°C der ersten Keramikstruktur 8 x 10⁻⁶ bis 12 x 10⁻⁶/°C beträgt, eine Druckfestigkeit bei 1400°C der ersten Keramikstruktur 5 MPa oder mehr beträgt, und ein Spalt zwischen der Leitung und der ersten Keramikstruktur geringer als 0,5 mm ist.

9. Förderausrüstungselement für geschmolzenes Glas nach Anspruch 8, wobei der lineare thermische Ausdehnungskoeffizient bei 20 bis 1000°C der ersten keramischen Struktur innerhalb von ±15% des linearen thermischen Ausdehnungskoeffizienten bei 20 bis 1000°C von Platin oder der Platinlegierung liegt, welches die Leitung aufbaut.

10. Förderausrüstungselement für geschmolzenes Glas nach Anspruch 8 oder 9, wobei eine Dicke der ersten Keramikstruktur 15 bis 50 mm beträgt.

11. Förderausrüstungselement für geschmolzenes Glas nach einem der Ansprüche 8 bis 10, welches, als die Leitung, eine Leitung einschließt, die mindestens eines von einem konvexen Teil oder einem konkaven Teil aufweist, welcher 360° in einer umlaufenden Richtung fortläuft.

12. Glasherstellungsvorrichtung, welche das Förderausrüstungselement für geschmolzenes Glas nach einem der Ansprüche 8 bis 11 einschließt.

13. Verfahren zur Herstellung eines Glases, welches die Glasherstellungsvorrichtung nach Anspruch 12 verwendet.

## Revendications

1. Procédé de production d'un élément d'équipement de transfert de verre fondu présentant une structure de conduit pour du verre fondu contenant au moins un conduit comprenant du platine ou un alliage de platine, une première structure de céramique agencée autour du conduit et une seconde structure de céramique située autour de la première structure de céramique,
dans lequel un jeu entre le conduit et la seconde structure de céramique est rempli d'un corps pâteux, le corps pâteux est préparé en mélangeant des premières particules de zircone stabilisées présentant un diamètre médian D50 de 0,2 à 5 µm avec des secondes particules de zircone stabilisées présentant un diamètre médian D50 de 0,2 à 2 mm d'une telle manière que le rapport de la masse des premières particules de zircone stabilisées sur la masse des secondes particules de zircone stabilisées est compris entre 0,3 et 0,6, dans lequel chacune des premières particules de zircone stabilisées et secondes particules de zircone stabilisées contient, en termes de % en masse des compositions totales respectives, 75 % en poids ou plus d'un oxyde de zirconium, et une proportion de zircone cubique dans l'oxyde de zirconium est supérieure ou égale à 80 % en poids, et au moins l'un de stabilisateurs sélectionnés à partir du groupe constitué par l'oxyde d'yttrium et l'oxyde de cérium est contenu avec une teneur totale de 6 à 25 % en poids, puis la première structure de céramique est formée par frittage du corps pâteux à une température de 1200 à 1700°C.

2. Procédé de production d'un élément d'équipement de transfert de verre fondu selon la revendication 1, dans lequel la structure de conduit pour verre fondu comporte au moins un premier conduit présentant un axe central suivant une direction verticale et au moins un second conduit présentant un axe central suivant une direction horizontale communicant avec le premier conduit.

3. Procédé de production d'un élément d'équipement de transfert de verre fondu selon la revendication 1 ou 2, comportant un conduit qui présente au moins l'un d'une partie convexe et d'une partie concave, qui est continue sur 360° dans une direction circonférentielle du conduit.

4. Procédé de production d'un élément d'équipement de transfert de verre fondu selon l'une quelconque des revendications 1 à 3, comportant un conduit à l'intérieur duquel est agencé un agitateur en tant que conduit.

5. Procédé de production d'un élément d'équipement de transfert de verre fondu selon l'une quelconque des revendications 1 à 4, dans lequel le platine ou l'alliage de platine constituant le conduit est un platine renforcé comprenant du platine ou l'alliage de platine et un oxyde métallique dispersé à l'intérieur.

6. Procédé de production d'un élément d'équipement de transfert de verre fondu selon l'une quelconque des revendications 1 à 5, dans lequel le diamètre des 90% de fines cumulées (D90) des premières particules de zircone stabilisées est inférieur ou égal à 10 µm et le diamètre des 10% de fines cumulées (D10) des secondes particules de zircone stabilisées est supérieur ou égal à 0,1 mm.

7. Procédé de production d'un élément d'équipement de transfert de verre fondu selon l'une quelconque des revendications 1 à 5, dans lequel la seconde structure de céramique comprend principalement au moins l'une sélectionnée à partir du groupe constitué par l'alumine, la magnésie, la zircone et la silice.

8. Elément d'équipement de transport de verre fondu produit par le procédé de production d'un élément d'équipement de transfert de verre fondu selon l'une quelconque des revendications 1 à 7,
dans lequel une porosité ouverte de la première structure de céramique est de 25 à 60 %, un coefficient de dilatation thermique linéaire de 20 à 1000°C de la première structure de céramique est compris entre 8x10⁻⁶ et 12x10⁻⁶/°C, une résistance à la compression à 1400°C de la première structure de céramique est supérieure ou égale à 5 MPa, et un jeu entre le conduit et la première structure de céramique est inférieur à 0,5 mm.

9. Elément d'équipement de transport de verre fondu selon la revendication 8, dans lequel le coefficient de dilatation thermique linéaire de 20 à 1000°C de la première structure de céramique est à moins de ±15% du coefficient de dilatation thermique linéaire de 20 à 1000°C du platine ou de l'alliage de platine constituant le conduit.

10. Elément d'équipement de transport de verre fondu selon la revendication 8 ou 9, dans lequel une épaisseur de la première structure de céramique est comprise entre 15 et 50 mm.

11. Elément d'équipement de transport de verre fondu selon l'une quelconque des revendications 8 à 10, comportant, en tant que conduit, un conduit qui présente au moins l'une d'une partie convexe et d'une partie concave, qui est continue sur 360° dans une direction circonférentielle.

12. Dispositif de fabrication de verre, comportant l'élément d'équipement de transfert de verre fondu selon l'une quelconque des revendications 8 à 11.

13. Procédé de fabrication de verre utilisant le dispositif de fabrication de verre selon la revendication 12.
